# EUROPEAN PATENT APPLICATION

(11) **EP 3 048 436 A1**
(43) Date of publication of application: **27.07.2016**
(21) Application number: 16150090.5
(22) Date of filing: 04.01.2016
(51) Int. Cl.: G01M 11/08, G01N 21/88

(54) **MAINTENANCE DEVICE, MAINTENANCE SYSTEM, AND METHODS FOR EXAMINING AN INSPECTION TARGET**

(30) Priority: 06.01.2015 US 201514590532
(71) Applicant: Honeywell International Inc., Morris Plains, NJ 07950 (US)
(72) Inventor: PATIL, Amit, Morris Plains, NJ New Jersey 07950 (US)
(74) Representative: Houghton, Mark Phillip

(57) **Abstract**

Devices, systems, and methods are provided for examining an inspection target. The maintenance device is connected to a configuration platform using a communication interface and receives a set of inspection target information from the configuration platform. The set of inspection target information is stored in a memory module of the maintenance device. An illumination source illuminates the inspection target and a sensor module obtains a set of inspection target features from the inspection target. Inspection target information is selected from the memory module based on the obtained set of inspection target features and the selected inspection target information is projected using an information projector.

## Description

### TECHNICAL FIELD

The present disclosure generally relates to visual inspection devices, and more particularly, intelligent maintenance devices, systems, and methods for examining inspection targets.

### BACKGROUND

Visual inspection devices are used to aid in the performance of maintenance procedures for vehicles such as automobiles, aircraft, spacecraft, buses, trains, etc. as well as various machines. During a visual inspection, an operator visibly observes an inspection target and makes an assessment regarding the serviceability of the inspection target based on their observation. Advances in the use of Nondestructive Inspection (NDI) options such as dye penetrant, eddy current, and ultrasonic have reduced the need for visual inspection. However, no matter how advanced the NDI options, visual inspection remains important when making the decision regarding serviceability of a vehicle or machine.

Flashlights are primarily used to aid operators in performing visual inspections in dark areas. As known to those skilled in the art, flashlights provide illumination in dark areas and additionally allow operators to focus on an inspection target.One skilled in the art will also appreciate that providing an operator with additional information about the inspection target during a visual inspection will yield a more accurate assessment regarding the serviceability of the inspection target. However, conventional flashlights do not provide operators with any information relating to the inspection target.

In many instances, an expert technician of the vehicle or machine being inspected is not the one performing the visual inspection. In these cases, the operator performing the visual inspection communicates with the expert technician, often by use of a telephone, mobile phone, or video conference. However, remote diagnosis over the phone may not provide the expert technician with all the information needed while video conferencing systems may be too bulky to access difficult to reach portions of the vehicle or machine being inspected.

Accordingly, it is desirable to provide devices, systems, and methods for visually examining an inspection target. Other desirable features and characteristics of the present invention will become apparent from the subsequent detailed description and the appended claims, taken in conjunction with the accompanying drawings and the foregoing technical field and background.

### BRIEF SUMMARY

Various embodiments of a maintenance device, a maintenance device system, and a method for examining an inspection target are disclosed herein.

In one embodiment, the maintenance device includes an electronic control module having a processor module and a memory module, the memory module configured to store a set of inspection target information. The device further includes a communication interface configured to receive the set of inspection target information and store the set of inspection target information in the memory module. The device further includes an illumination source configured to illuminate the inspection target.The device further includes a sensor module in operable communication with the electronic control module that is configured to obtain a set of inspection target features from the illuminated inspection target and transmit the inspection target features to the electronic control module. The device further includes an information projector in operable communication with the electronic control module that is configured to receive and project selected inspection target information, the selected inspection target information selected by the electronic control module based on the inspection target features.

In another embodiment, the maintenance device system includes a remote device having a wireless communication module configured to receive a set of inspection target information from a database over a wireless communication channel and a maintenance device. The maintenance device includes an electronic control module having a processor module and a memory module, the memory module configured to store a set of inspection target information. The device further includes a communication interface configured to receive the set of inspection target information and store the set of inspection target information in the memory module. The device further includes an illumination source configured to illuminate the inspection target.and the device further includes a sensor module in operable communication with the electronic control module that isconfigured to obtain a set of inspection target features from the illuminated inspection target and transmit the inspection target features to the electronic control module. The device further includes an information projectorin operable communication with the electronic control module that is configured to receive and project selected inspection target information, the selected inspection target information selected by the electronic control module based on the inspection target features.

In another embodiment, the method includes connecting the maintenance device to a configuration platform using a communication interface. A set of inspection target information is received from the configuration platform and stored in a memory module. The inspection target is illuminated using an illumination source. A set of inspection target features of the inspection target is obtained using a sensor module. Inspection target information from the memory module is selected based on the obtained set of inspection target features. The method further includes projecting the selected inspection target information using an information projector.

### BRIEF DESCRIPTION OF THE DRAWINGS

The exemplary embodiments will hereinafter be described in conjunction with the following drawing figures, wherein like numerals denote like elements, and wherein:
FIG. 1 is a perspective view illustrating a maintenance device for examining an inspection target in accordance with an exemplary embodiment;
FIG. 2 is a schematic representation of the maintenance device for examining an inspection target in accordance with another exemplary embodiment;
FIG. 3 is a flow chart illustrating a method for examining an inspection target with the device shown in FIGS. 1 and 2;
FIG. 4 is a schematic representation of the maintenance device for examining an inspection target in accordance with another exemplary embodiment;
FIG. 5 is a schematic representation of the maintenance device for examining an inspection target in accordance with another exemplary embodiment;
FIG. 6 is a schematic representation of the maintenance device for examining an inspection target in accordance with another exemplary embodiment;
FIG. 7 is anend view of a maintenance device illustrating the operation mode switch of the device shown in FIG. 6;
FIG. 8 is a schematic representation of the maintenance device for examining an inspection target in accordance with another exemplary embodiment; and
FIG. 9 is schematic representation of illustrating a maintenance device system for examining an inspection target in accordance with an exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

It should be understood that throughout the drawings, corresponding reference numerals indicate like or corresponding parts and features. As used herein, the term module refers to any hardware, software, firmware, electronic control component, processing logic, and/or processor device, individually or in any combination, including without limitation: application specific integrated circuit (ASIC), an electronic circuit, a processor module (shared, dedicated, or group) and memory module that executes one or more software or firmware programs, a combinational logic circuit, and/or other suitable components that provide the described functionality.

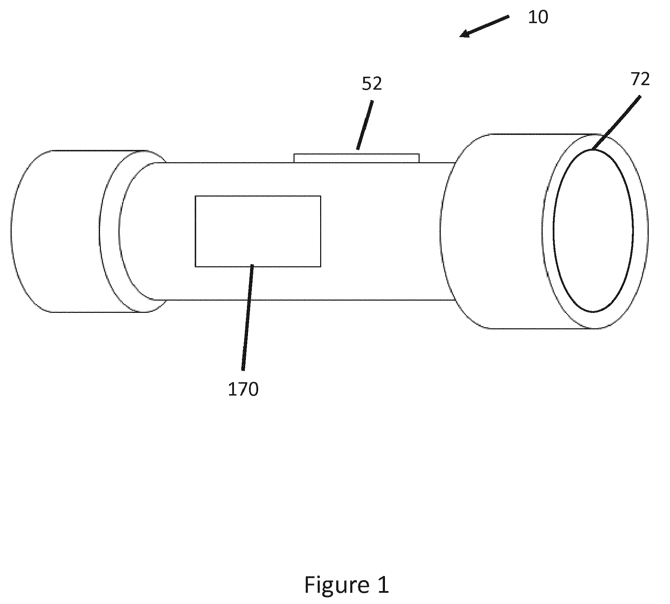

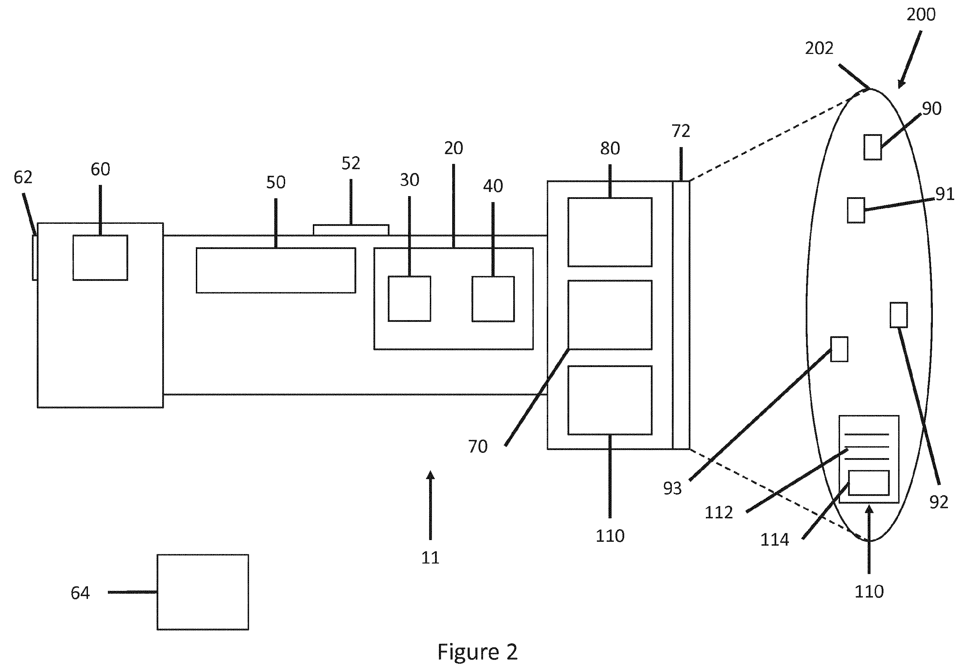

Referring to the Figures, a maintenance device 10 for examining an inspection target 200 is shown herein. In the exemplary embodiments, the device 10 is depicted as a visual inspection tool such as a flashlight. However, the device 10 may be implemented and/or utilized in conjunction with other types of inspection tools. For instance, other inspection tools include, but are not limited to, video borescopes, fiberscopes, videoscopes, etc. An exemplary maintenance device 10 of the various embodiments is shown in perspective view in FIG. 1. Schematic cross sectional viewsof the devices 11, 15 and systems 12-14 are illustrated in FIGS. 2 and 4-9 for greater understanding.

As shown in FIG. 2, the device 11 includes an electronic control module 20 having a processor module 30 and a memory module 40 configured to store a set of inspection target information. The device 11 also includes a battery 50 for supplying power to the various components of the device 11 and an on/off switch 52. The device 11 also includes a communication interface 60 configured to receive the inspection target information and facilitate storing of the inspection target information in the memory module 40. The device 11 also includes an illumination source 70 configured to illuminate the inspection target 200 and a sensor module 80 configured to obtain a set of inspection target features 90-93, from an illuminated area 202 of the inspection target 200 and transmit the inspection target features 90-93 to the electronic control module 20. In the embodiment of FIG. 2, the device 11 further includes an information projector 100 configured to receive and project selected inspection target information 110 that is selected by the electronic control module 20based on the set of inspection target features 90-93.

One skilled in the art will appreciate that the depiction of the device 11 and the various components of the device 11 are merely exemplary and are not limiting with respect to size of the components or location within the device 11. Thus, the present disclosure is not limited to any specific layout and the device 11 may include additional electronic components not shown in its implementation.

In the embodiment of FIG. 2, the electronic control module 20 facilitates electronic communication between the various components of the device 11. The electronic control module 20 is in operable communication with the communication interface 60, the sensor module 80, and the information projector 100. For example, the set of inspection target information received through the communication interface 60 is stored in the memory module 40 and delivered to the information projector 100 as needed. The electronic control module 20 includes the processor module 30 and the memory module 40. As known to those skilled in the art, the electronic control module 20 may include various electronic components (not shown) in its implementation.

The battery 50 supplies electrical power to the electronic control module 20 and the various components of the device 11. Different types of batteries 50 are contemplated by the present disclosure. For example, batteries 50 include removable batteries, rechargeable batteries, battery packs, lithium batteries, etc. The characteristics of the battery 50 such as size, shape, composition, electrical output, etc. are selected based on the electrical requirements of the device 11 and other design specifications.

The communication interface 60 is configured to receive the set of inspection target information from a configuration platform 64 during initial configuration of the device 11. For example, the set of inspection target information may include technical information, procedural information, instructions, etc. relating to a plurality of inspection targets 200. The set of inspection target information further includes pictures, graphs, videos, etc. relating a plurality of inspection targets 200.The configuration platform 64 includes a personal computer, laptop, mobile device, or calibration console. The inspection target information is stored in the memory module 40 of the electronic control module 20.

The communication interface 60 has an input plug 62 that is accessible on the exterior of the device 11. In this way, an operator is able to connect the configuration platform 64 to the device 11 through the input plug 62 of the communication interface. The input plug 62 of the communication interface 60 may have different shapes and operate using a variety of protocols according to design preference. Examples of input plugs 62 include Universal Serial Bus (USB) A-Type, USB B-Type, Mini USB, Micro USB, USB 3.0, FireWire, Ethernet, etc.

In addition to the set of inspection target information, other forms of information, data, features, or electrical signals may be delivered to the device 11 using the communication interface 60. This other information may include the delivery of electrical power to charge the battery 50 or power the device 11, additional data regarding the inspection target 200, etc. Additional functionalities relating to the operation of the device 11 are also contemplated through the use of the communication interface 60.

The illumination source 70is configured to illuminate the inspection target 200 in a manner similar to a flashlight. As detailed above, the device 11 may often be used in dark and confined spaces in which the operator may find it difficult to visually inspect the inspection target 200 without illumination from the illumination source 70. The illumination from the illumination source 70 produces an illuminated area 202 of the inspection target 200.

For example, the illumination source 70 may be a light emitting diode (LED) module. Other examples of the illumination source 70 include incandescent bulbs, compact fluorescent (CFL), halogen bulbs, laser,etc. In certain situations, it may be desirable for the illumination source 70 to illuminate the inspection target in a color other than white light, for example red light in a low light or night time inspection. For this purpose, the device 11 may include LED modules which are capable of generating visible light in a variety of colors in the visible spectrum. The device 11 may also have a lens 72 to allow the operator to focus, direct, or otherwise manipulate the light coming from the illumination source 70.

The sensor module 80 is configured to obtain a set of inspection target features 90-93 from the illuminated area 200 of the inspection target 200 and transmit the inspection target features 90-93 to the electronic control module 20. In oneembodiment the sensor module 80is an optical camera module capable of obtaining photos and/or video of the inspection target 200, as is known to those skilled in the art. Inspection target features 90-93 include physical characteristics of the inspection target 200 such as shape or location of identifying features on the inspection target 200, identifying labels on the inspection target 200, serial numbers, model numbers, etc. as known to those skilled in the art. The lens 72 may allow the operator to focus or manipulate the images obtained by the sensor module 80.

Other embodiments the sensor module 80 include: an infra-red camera module capable of obtaining infra-red photos and/or video of the inspection target 200; a radar module capable of obtaining surface and shape data of the inspection target 200; a sonar module capable of obtaining surface and shape data of the inspection target 200; a code scanning module capable of reading a code on the inspection target 200 such as a linear barcode, a matrix barcode such as a quick response (QR) code, or other identifying serial information; and/or combination thereof. One skilled in the art will appreciate that other forms of sensor module 80 capable of obtaining inspection target features 90-93

The information projector 100 is configured to receive and project selected inspection target information 110. The selected inspection target information 110 is selected by the electronic control module 20 based on the inspection target features 90-93. In one embodiment the information projector 100 is a liquid-crystal display (LCD) projector. In another embodiment the information projector 100 is a digital light processing (DLP) projector. The projected inspection target information 110 is projected by the information projector 100 so as to be located proximate to or overlying the inspection target 200. For example, the projected inspection target information 110 is projected within the illuminated area 202 of the inspection target 200, or alternately the projected inspection target information 110 is projected outside of the illuminated area 202 of the inspection target 200. The lens 72 may allow the operator to focus or manipulate the projected inspection target information 110.

The projected inspection target information 110 may include various types of information. This information may include textual information 112 relating to the inspection target 200which may include technical information, procedural information, instructions, etc. relating to the inspection target 200.The projected inspection target information 110 may also include graphical information 114 relating to the inspection target 200. In a non-limiting embodiment the graphical information 114 includes pictures, graphs, videos, etc. relating to the inspection target 200. The projected inspection target information 110 may also include both textual information 112 and graphical information 114 relating to the inspection target 200.

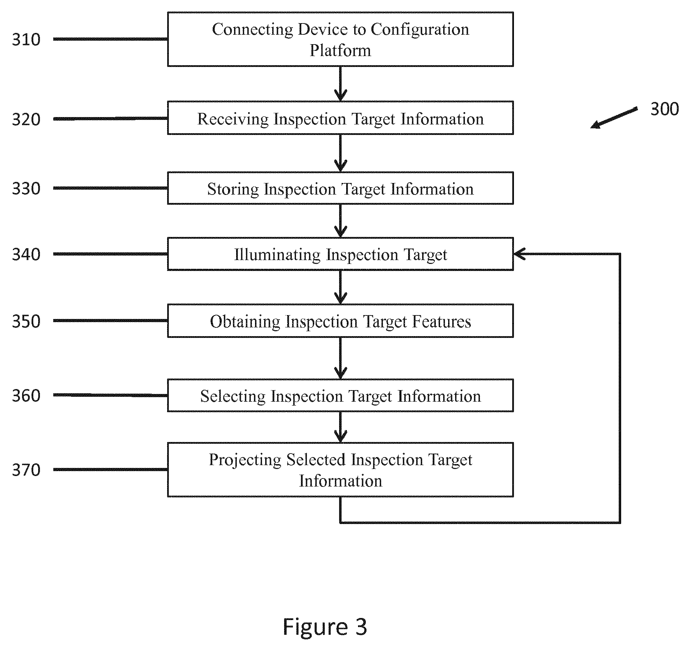

Referring now to FIG. 3, and with continued reference to FIG. 2, a flowchart illustrates a method 300 performed by the device 11 of FIG. 2 in accordance with the present disclosure. As can be appreciated in light of the disclosure, the order of operation within the method is not limited to the sequential execution as illustrated in FIG. 3, but may be performed in one or more varying orders as applicable and in accordance with the requirements of a given application.

In various exemplary embodiments, the device 11 and method 300 are operated based on predetermined events, such as a connection through the communication interface 60 or the actuation of the on/off switch 52. Method 300 may be performed by the device 11 or may be performed by any other suitable device or system configured in a manner consistent with the teachings of the present disclosure.

The method 300 starts at block 310 with connecting the maintenance device 11 to the configuration platform 64 using the input plug 62 of the communication interface 60. At block 320, the device 11 receives the set of inspection target information from the configuration platform 64. At block 330, the set of inspection target information is stored in the memory module 40. One skilled in the art will appreciate that blocks 310-330 calibrate the device 11 for later use by the operator.

At block 340, the illumination source 70 illuminates an illuminated area 202 of the inspection target 200. The device 11 and the illumination source 70 may be turned on through use of the on/off switch 52, as is known to those skilled in the art. At block 350, the sensor module 80 obtains a set of inspection target features 90-93 from the inspection target 200 and transmits the inspection target features 90-93 to the electronic control module. At block 360, the electronic control module selects inspection target information from the memory module 40 based on the obtained set of inspection target features 90-93. At block 370, the selected inspection target information is projected as the projected inspection target information 110 by the information projector 100. Following block 370, the method 300 returns to block 340 as necessary to illuminate additional inspection target 200.

In one embodiment, at block 350, the sensor module 80 is an optical camera module that obtains photos and/or video of the inspection target 200, as is known to those skilled in the art. Examples of inspection target features 90-93 include physical characteristics of the inspection target 200 such as shape or location of identifying features on the inspection target 200, identifying labels on the inspection target 200, serial numbers, model numbers, etc. as known to those skilled in the art.

In this way, the device 11 receives the set of inspection target information from the configuration platform 64 using the communication interface 60. The illumination source 70 illuminates the inspection target 200 and the sensor module 80 obtains a set of inspection target features 90-93 from the illuminated area 202 of the inspection target 200. The information projector 100 projects the projected inspection target information 110 based on the inspection target features 90-93.

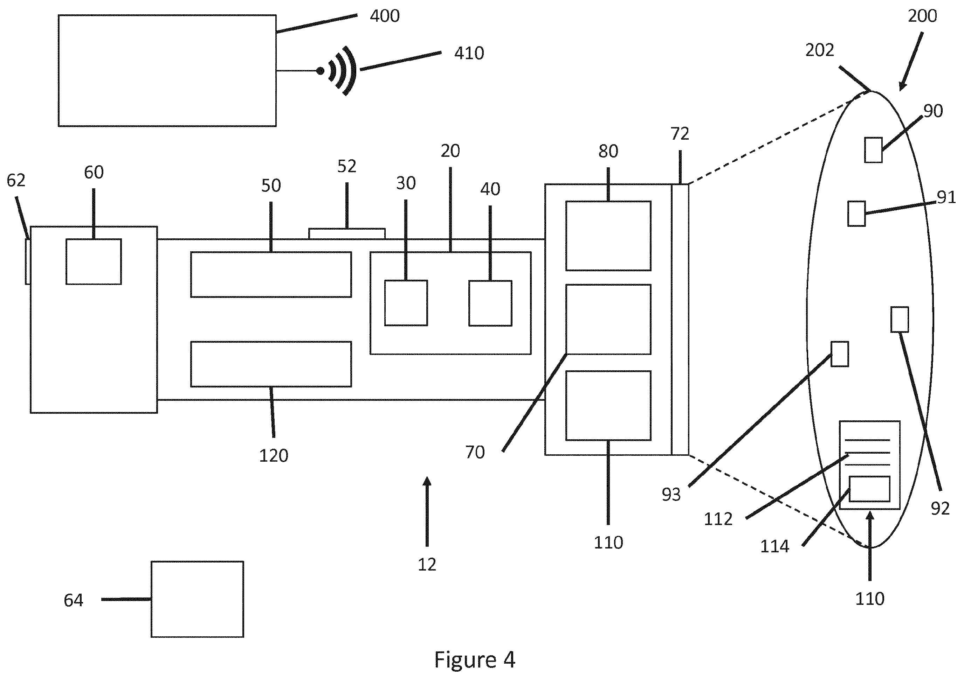

With reference now to FIG. 4, an embodiment of a device 12 for examining an inspection target 200 is provided. In this embodiment, the device 12 includes a wireless communication module 120. With continuing reference to FIGS. 1-3, as similar components are used in the device 12 relative to the device 11, similar reference numerals will be used.

As with the embodiment of FIG. 2, the device 12 includes the electronic control module 20, the processor module 30, the memory module 40, the battery 50, and the on/off switch 52. The device 12 further includes the communication interface 60, the input plug 62, the illumination source 70, the lens 72, the sensor module 80, and the information projector 100.

Similar to the device 11 of FIG. 2, the device 12 receives the set of inspection target information using the communication interface 60 and stores the set of inspection target information in the memory module 40. The illumination source 70 illuminates the inspection target 200 and the sensor module obtains a set of inspection target features 90-93 from the illuminated area 202 of the inspection target 200. The information projector 100 projects the projected inspection target information 110 based on the inspection target features 90-93.

The wireless communication module 120 is in operable communication with the electronic control module 20 and is configured to transmit and receive a plurality of wireless communication signals between the device 12 and a remote device 400 over a wireless communication channel 410. For example, the wireless communication module 120 communicates with the remote device 400 over a wireless communication channel 410 using a protocol such as Bluetooth. One skilled in the art will appreciate that other wireless protocols such as Wi-Fi, ZigBee, etc. or mobile data networks such as cellular networks may be used depending on the remote device 400 used.

In one example, the remote device 400 is a mobile phone with wireless access to the Internet or a host device. One skilled in the art will appreciate that other remote devices 400 include laptops, personal computers, tablets, etc. In this way, the device 12 can connect to the Internet or a host device through the remote device 400.

The device 12 receives a supplementary set of inspection target information from the remote device 400 over the communication channel 410. The device 12 transmits the inspection target features 90-93 to the remote device 400 over the communication channel 410 and the device 12 receives dynamic inspection target information from the remote device 400 based on the inspection target features 90-93. The dynamic inspection target information is projected with the projected inspection target information 110 by the information projector 100.

In another embodiment, the device 12 transmits an image or video of the inspection target 200 to the remote device 400. In this way, the device 12 uses the remote device 400 to facilitate wireless communications with the Internet or a host device to provide the device 12 with supplemental inspection target information and dynamic inspection target information.

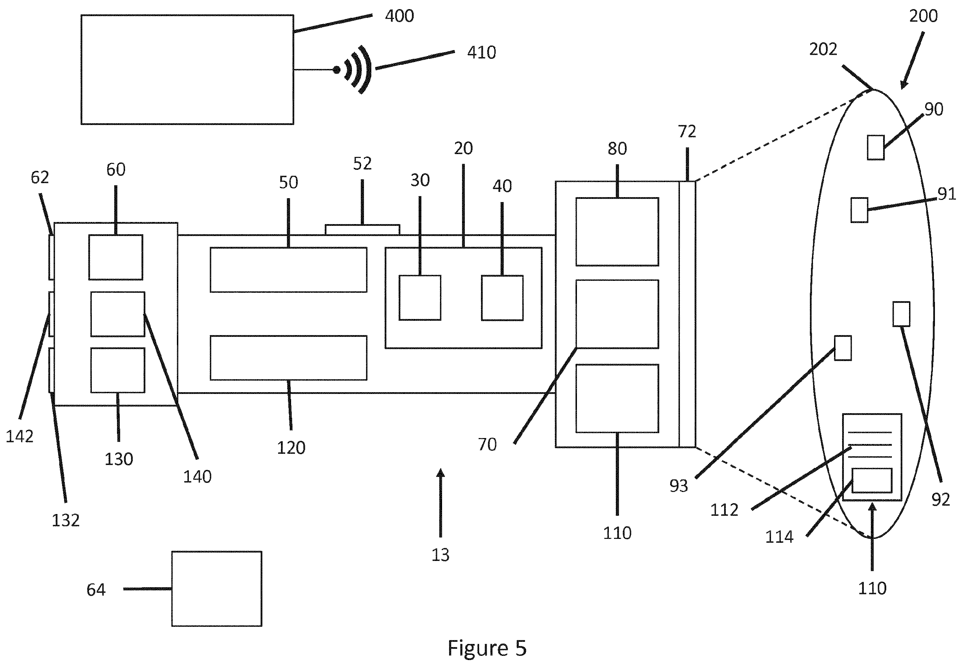

With reference now to FIG. 5, an embodiment of a device 13 for examining an inspection target 200 is provided. In this embodiment, the device 13 includes an audio input interface 130 and an audio output interface 140. With continuing reference to FIGS. 1-4, as similar components are used in the device 13 relative to the devices 11,12, similar reference numerals will be used.

As with the embodiment of FIG. 4, the device 13 includes the electronic control module 20, the processor module 30, the memory module 40, the battery 50, and the on/off switch 52. The device 13 further includes the communication interface 60, the input plug 62, the illumination source 70, the lens 72, the sensor module 80, the information projector 100, and the wireless communication module 120.

Similar to the embodiment of the device 11 of FIG. 2, the device 13 receives the set of inspection target information using the communication interface 60 and stores the set of inspection target information in the memory module 40. The illumination source 70 illuminates the inspection target 200 and the sensor module obtains a set of inspection target features 90-93 from the illuminated area 202 of the inspection target 200. The information projector 100 projects the projected inspection target information 110 based on the inspection target features 90-93.

With further regard to the embodiment of the device 12 of FIG. 4, the device 13 uses the remote device 400 to facilitate wireless communications with the Internet or a host device to provide the device 12 with supplemental inspection target information and dynamic inspection target information.

The audio input interface 130 is in operable communication with the electronic control module 20 and is configured to receive audible communications from the operator of the device 13. In an example, the audio input interface 130 includesan audio input 132such as a microphone. In another embodiment, the audio input 132 receives an input plug, such as from a headset or external microphone, as is known to those skilled in the art.

The audio output interface 140is in operable communication with the electronic control module 20 and is configured to broadcast received audio communications to the operator of the device 13. In an example, the audio output interface 140 includes an audio output 142such as a speaker. In another non-limiting embodiment, the audio output 142 receives an output plug, such as from a headset or external headphone, as is known to those skilled in the art.

One skilled in the art will appreciate that the audio input 132 and the audio output 142 may be combined into a single interface (not shown) so that a single headset and headset plug may be used to deliver audible communications from the operator to the device 13 as well as audio communications from the device 13 to the operator. An example of such input/output interfaces include 3.5mm audio cables, although ones skilled in the art will appreciate that different input/output interfaces may be used. In another embodiment, the audio input 132, the audio output 142, and the input plug 62 of the communication interface may be combined into a single interface as is known to those skilled in the art.

In another embodiment, the audio input interface 130 includes both a microphone and an input plug and/or the audio output interface 140 includes both a speaker and an output plug.

In an embodiment, the device 13 transmits the audible communications received by the audio input interface 130 to the remote device 400 using the wireless communication module 120. The device 13 further receives audio communications from the remote device 400 using the wireless communication module 120 and broadcasts the received audio communications to the operator with the audio output interface 140.

In this way, the audio input interface 130 and the audio output interface 140 facilitate audio communications between the operator of the device 13 and, for example, a remote technician. As detailed above, the device 13 may further transmit an image or video of the inspection target 200 to the remote device 400. As such, the device 13 may provide a remote technician with detailed images and/or video of the inspection target 200 while further allowing the remote technician and the operator of the device 13 to communicate with one another. Stated differently, the device 13 may be used to facilitate video conferencing between the operator of the device 13 and the remote technician to evaluate the inspection target 200.

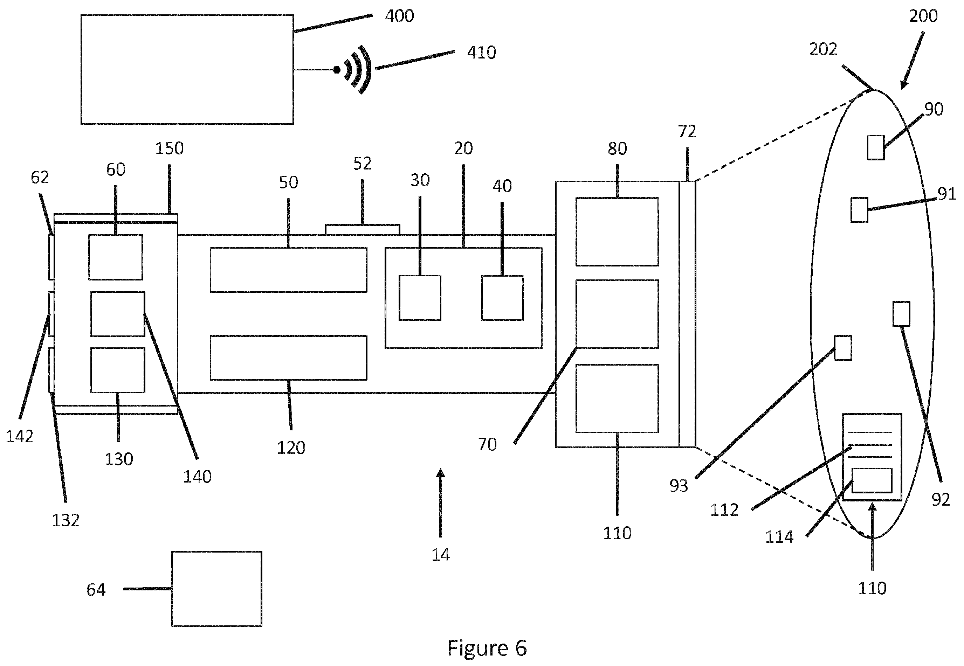

With reference now to FIG. 6, an embodiment of a device 14 for examining an inspection target 200 is provided. In this embodiment, the device 14 includes an operation mode switch 150. With continuing reference to FIGS. 1-5, as similar components are used in the device 14 relative to the devices 11-13, similar reference numerals will be used.

As with the embodiment of FIG. 5, the device 14 includes the electronic control module 20, the processor module 30, the memory module 40, the battery 50, and the on/off switch 52. The device 14 further includes the communication interface 60, the input plug 62, the illumination source 70, the lens 72, the sensor module 80, the information projector 100, and the wireless communication module 120. The device 14 also includes the audio input interface 130, the audio input 132, the audio output interface 140, and the audio output 142.

Similar to the embodiment of the device 11 of FIG. 2, the device 14 receives the set of inspection target information using the communication interface 60 and stores the set of inspection target information in the memory module 40. The illumination source 70 illuminates the inspection target 200 and the sensor module obtains a set of inspection target features 90-93 from the illuminated area 202 of the inspection target 200. The information projector 100 projects the projected inspection target information 110 based on the inspection target features 90-93.

With further reference to the embodiment of the device 12 of FIG. 4, the device 14 uses the remote device 400 to facilitate wireless communications with the Internet or a host device to provide the device 14 with supplemental inspection target information and dynamic inspection target information.

With further reference to the embodiment of the device 13 of FIG. 5, the device 14 transmits the audible communications received by the audio input interface 130 to the remote device 400 using the wireless communication module 120. The device 14 further receives audio communications from the remote device 400 using the wireless communication module 120 and broadcasts the received audio communications to the operator with the audio output interface 140.

As detailed above, the device 14 may further transmit an image or video of the inspection target 200 to the remote device 400. As such, the device 14 may provide a remote technician with detailed images and/or video of the inspection target 200 while further allowing the remote technician and the operator of the device 14 to communicate with one another. Stated differently, the device 14 may be used to facilitate video conferencing between the operator of the device 14 and the remote technician to evaluate the inspection target 200.

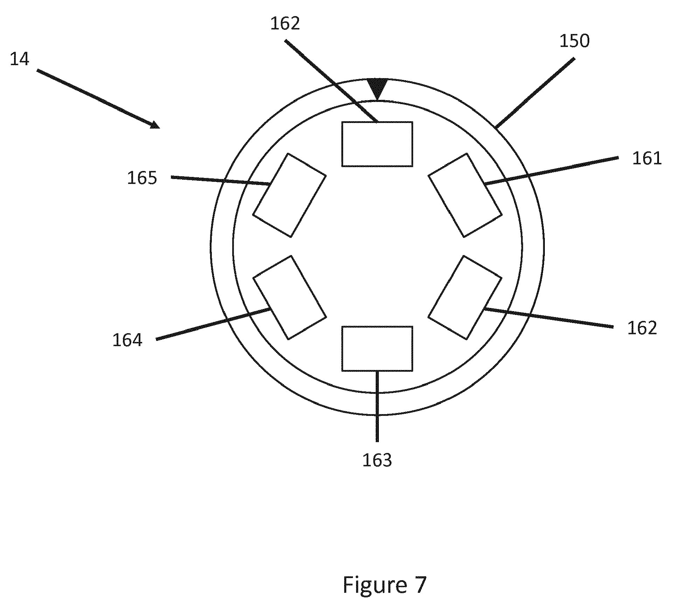

The operation mode switch 150 in operable communication with the electronic control module 20 and is configured to allow the operator to select an operation mode 160-165 for the device 14. For example and with further reference to FIG. 7, the operation mode switch 150 is configured to rotatably select an operation mode 160-165 for the device 14. The operation mode switch 150 may also incorporate the functionality of the on/off switch 52.

Operation modes 160-165 for the device 14 may include: an illumination mode, a sensor mode, an illumination and sensing combined mode, an illumination mode with audio recording, an illumination mode with image recording, an illumination mode with video recording, and an illumination mode with video conferencing. One skilled in the art will appreciate that the number of operation modes 160-165 for the device 14 may be adjusted to accommodate additional combinations of previously disclosed features. For example, an illumination mode with red light and sensing mode and video conferencing mode. It is therefore contemplated by this disclosure that the number of operation modes 160-165 and they type of operation mode may include any combination of the previously disclosed features and functionality without departing from the spirit of the present disclosure.

The operation of the device 14 is dependent upon the selected operation mode. 160-165. In an example, when the device 14 is in an illumination mode, the illumination source 70 illuminates the inspection target 200. In a non-limiting example, when the device 14 is in a sensor mode, the sensor module 80 obtains the set of inspection target features 90-93 from the inspection target. When the device 14 is in an audio conference mode the audible communications and the audio communications are transmitted between the device 14 and the remote device 400 over the wireless communication channel 410. When the device 14 is in a video conference mode a video captured by the sensor module 80 is transmitted between the device 14 and the remote device 400 over the wireless communication channel 410.When the device 14 is in an image capture mode an image captured by the sensor module 80 is stored in the memory module 40. Alternate and/or additional operation modes may be enabled in a similar manner with the operation mode switch 150.

One skilled in the art will also appreciate that the rotatably selectable operation mode switch 150 depicted in FIGS. 6 and 7 is exemplary and that the operation mode switch may be implemented using various switches. For example, the operation mode switch 150 may be a linear switch the operation modes 160-165 may be in the form of actuatable buttons. The operation mode switch 150 may also be implemented on the remote device 400. For example, the operator may select the operation mode 160-165 on the remote device 400 and the remote device 400 may communicate the operation mode 160-165 to the device 14 over the wireless communication channel 410.

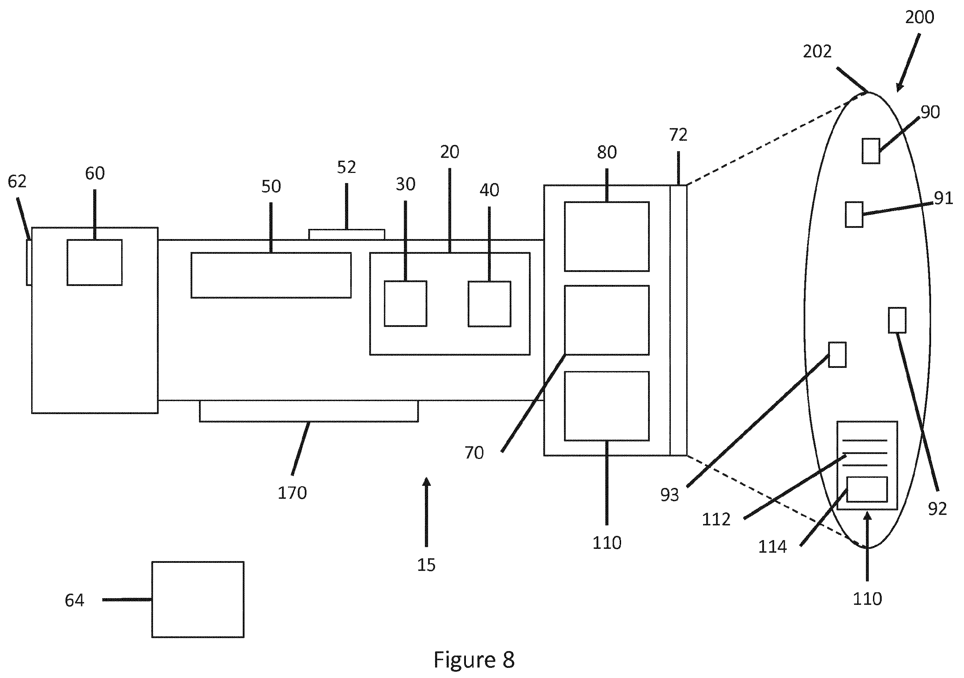

With reference now to FIG. 8, an embodiment of a device 15 for examining an inspection target 200 is provided. In this embodiment, the device 15 includes a display module 170. With continuing reference to FIGS. 1-3, as similar components are used in the device 15 relative to the device 11, similar reference numerals will be used.

As with the embodiment of FIG. 2, the device 15 includes the electronic control module 20, the processor module 30, the memory module 40, the battery 50, and the on/off switch 52. The device 12 further includes the communication interface 60, the input plug 62, the illumination source 70, the lens 72, the sensor module 80, and the information projector 100.

Similar to the embodiment of the device 11 of FIG. 2, the device 15 receives the set of inspection target information using the communication interface 60 and stores the set of inspection target information in the memory module 40. The illumination source 70 illuminates the inspection target 200 and the sensor module obtains a set of inspection target features 90-93 from the illuminated area 202 of the inspection target 200. The information projector 100 projects the projected inspection target information 110 based on the inspection target features 90-93.

The display module 170 is in operable communication with the electronic control module 20 and is configured to display inspection target information, display information, or a combination thereof to the operator. Similar to the operation of the information projector 110, the display module 170 displays information to the operator. One skilled in the art will appreciate that the content displayed by the display module 170 is not limiting on the scope of the present disclosure. The display module 170 is configured to display text, graphics, pictures, video, etc. as is known to those skilled in the art.

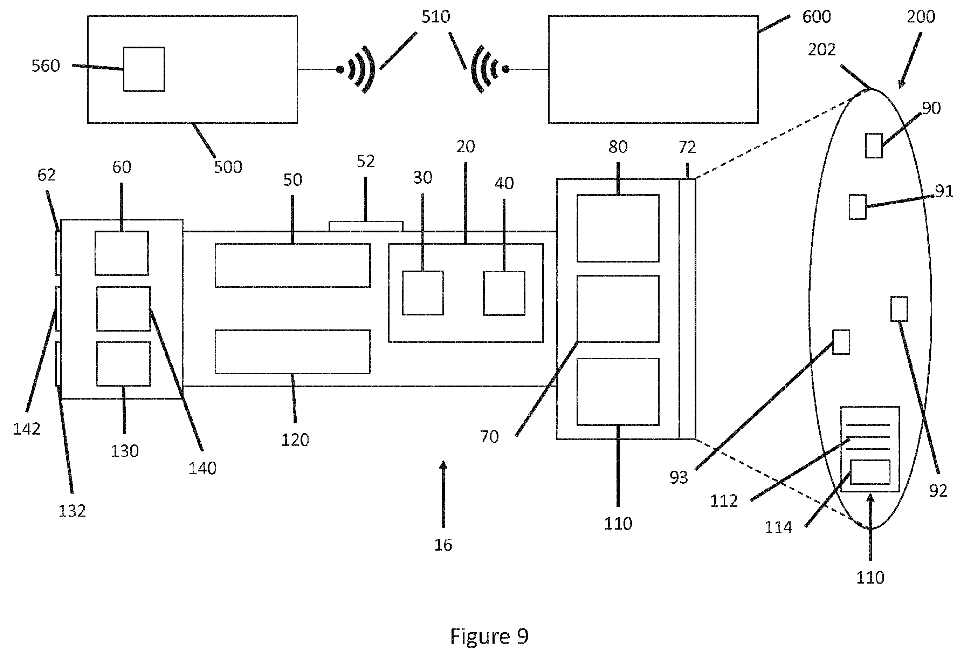

With reference now to FIG. 9, an embodiment of ansystem 16 for examining an inspection target 200 is provided. In this embodiment, the system 16 includes a remote device 500 having a wireless communication module 560 configured to receive the set of inspection target information from a remote database 600 over a wireless communication channel 510. With continuing reference to FIGS. 1-8, as similar components are used in the system 16 relative to the devices 11-15, similar reference numerals will be used.

As with the embodiment of FIG. 5, the system 16 includes the electronic control module 20, the processor module 30, the memory module 40, the battery 50, and the on/off switch 52. The system 16 further includes the communication interface 60, the input plug 62, the illumination source 70, the lens 72, the sensor module 80, the information projector 100, and the wireless communication module 120. The system 16 also includes the audio input interface 130, the audio input 132, the audio output interface 140, and the audio output 142.

Similar to the embodiment of the device 11 of FIG. 2, the system 16 receives the set of inspection target information using the communication interface 60 and stores the set of inspection target information in the memory module 40. The illumination source 70 illuminates the inspection target 200 and the sensor module obtains a set of inspection target features 90-93 from the illuminated area 202 of the inspection target 200. The information projector 100 projects the projected inspection target information 110 based on the inspection target features 90-93.

With further reference to the embodiment of the device 12 of FIG. 4, the system 16 may use the remote device 500 to facilitate wireless communications with the Internet or the remote database 600 to provide the system 16 with supplemental inspection target information and dynamic inspection target information.

With further reference to the device 13 of FIG. 5, the system 16 transmits the audible communications received by the audio input interface 130 to the remote device 500 using the wireless communication module 120. The device 14 further receives audio communications from the remote device 500 using the wireless communication module 120 and broadcasts the received audio communications to the operator with the audio output interface 140.

As detailed above, the system 16 may further transmit an image or video of the inspection target 200 to the remote device 500 and, in turn, the remote database 600. As such, the system 16 may provide the remote database 600 with detailed images and/or video of the inspection target 200 while further allowing the remote technician and the operator of the system 16 to communicate with one another. Stated differently, the system 16 may be used to facilitate video conferencing between the operator of the system 16 and the remote technician to evaluate the inspection target 200.

The remote database 600 may also transmit the initial set of inspection target information, replacing blocks 320 and 330 of the method 300 from FIG. 3. In this way, the system 16 need not be physically connected to the configuration platform 64 during the initial configuration.

One skilled in the art will appreciate that various combinations of features from the embodiments of FIGS. 1-9 may be incorporated with one another without departing from the spirit of the disclosure. In one example, the display 170 from the device 15 of FIG. 8 may be incorporated into the other embodiments. Similarly, the operation mode switch 150 and the operations modes 160-165 may be incorporated into the other embodiments.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

## Claims

1. A maintenance device for examining an inspection target, comprising:
an electronic control module having a processor module and a memory module, the memory module configured to store a set of inspection target information;
a communication interface in operable communication with the electronic control module and configured to receive the set of inspection target information and store the set of inspection targetinformationin the memory module;
an illumination source configured to illuminate the inspection target;
a sensor module in operable communication with the electronic control module and configured to obtain a set of inspection target features from the illuminated inspection target and transmit the inspection target features to the electronic control module; and
an information projector in operable communication with the electronic control module and configured to receive and project selectedinspection target information, the selected inspection target information selected by the electronic control module based on the inspection target features.

2. The maintenance device of claim 1, wherein the sensor module includes at least one of an optical sensor module and an infra-red sensor module.

3. The maintenance device of claim 1, further comprising:
a wireless communication module configured to transmit and receive a plurality of wireless communication signals between the maintenance device and a remote device over a wireless communication channel.

4. The maintenance device of claim 3, further comprising:
an audio input interface configured to receive audible communications from anoperator of the maintenance device; and
an audio output interface configured to broadcast received audio communications to the operator,
wherein the wireless communication signals transmitted between the maintenance device and the remote device over the wireless communication channel include the audible communications and the audio communications.

5. The maintenance device of claim 3, wherein the wireless communication signals include dynamic inspection target information based on the inspection target features, the information projector projecting the dynamic inspection target information.

6. The maintenance device of claim 4, further comprising:
an operation mode switch selectable between at least an illumination mode, a sensor mode, an audio conference mode, a video conference mode, and an image capture mode,
wherein the illumination source illuminates the inspection target when in the illumination mode, the sensor module obtains the set of inspection target features from the inspection target when in the sensor mode, the audible communications and the audio communications are transmitted between the maintenance device and the remote device over the wireless communication channel when in the audio conference mode, a video captured by the sensor module is transmitted between the maintenance device and the remote device over the wireless communication channel when in the video conference mode, and an image captured by the sensor module is stored in the memory module when in the image capture mode.

7. The maintenance device of claim 1, further comprising:
a display module,
wherein the set of inspection target information includes display information, the display module configured to display the display information based on the inspection target features.

8. A method for examining an inspection target using a maintenance device, comprising:
connecting the maintenance device to a configuration platform using a communication interface;
receiving a set of inspection target information from the configuration platform;
storing the set of inspection target information in a memory module;
illuminating the inspection target using an illumination source;
obtaining a set of inspection target features of the inspection target using a sensor module;
selecting inspection target information from the memory module based on the obtained set of inspection target features; and
projecting the selected inspection target information using an information projector.

9. The method of claim 8, wherein obtaining the set of inspection target features using the sensor module includes using at least one of an optical sensor module and an infra-red sensor module.

10. The method of claim 8, further comprising:
transmitting and receiving a plurality of wireless communication signals between the maintenance device and a remote device over a wireless communication channel using a wireless communication module.

11. The method of claim 10, further comprising:
extracting audible communications from anoperator of the maintenance device using an audio input interface;
transmitting the audible communications to the remote device over the wireless communication channel;
receiving audio communications from the remote device over the wireless communication channel; and
facilitating communications between the operator and the remote device by broadcasting the received audio communications using an audio output interface.

12. The method of claim 10, further comprising:
transmitting the inspection target features to the remote device over the wireless communication channel;
receiving dynamic inspection target information from the remote device over the wireless communication channel; and
projecting the dynamic inspection target information using the information projector.

13. The method of claim 11, further comprising:
selectingan operation mode from a group comprising an illumination mode, a sensor mode, an audio conference mode, a video conference mode, and an image capture mode;
when in the illumination mode:
illuminating the inspection target with the illumination source; when in the sensor mode:
obtaining the set of inspection target features from the inspection target with the sensor module;
when in the audio conference mode:
extracting audible communications from the operator of the maintenance device using the audio input interface;
transmitting the audible communications to the remote device over the wireless communication channel;
receiving audio communications from the remote device over the wireless communication channel;
facilitating communications between the operator and the remote device by broadcasting the received audio communications using an audio output interface;
when in the video conference mode:
obtaining a video stream with the sensor module; and
transmitting the obtained video stream to the remote deviceover the wireless communication channel; and
when in the image capture mode:
obtaining an image with the sensor module;
storing the obtained image in the memory module.

14. The method of claim 8, further comprising:
displaying the selected inspection target information using a display module.
